# EUROPEAN PATENT SPECIFICATION

(11) **EP 3 393 226 B1**
(45) Date of publication and mention of the grant of the patent: **23.09.2020**
(21) Application number: 16880111.6
(22) Date of filing: 22.12.2016
(51) Int. Cl.: A01C 7/06, A01C 23/02, A01C 7/10

(54) **AGRICULTURAL INPUT PLACEMENT SYSTEMS, METHODS, AND APPARATUS**
LANDWIRTSCHAFTLICHE EINBRINGUNGSPOSITIONIERUNGSSYSTEME SOWIE VERFAHREN UND VORRICHTUNG DAMIT
SYSTÈMES, PROCÉDÉS ET APPAREIL POUR LE PLACEMENT DE PRODUIT AGRICOLE

(30) Priority: 23.12.2015 US 201562387308 P
(43) Date of publication of application: 31.10.2018
(60) Divisional application: 20183817.4
(73) Proprietor: Precision Planting LLC, Tremont, IL 61568 (US)
(72) Inventor: MCMENAMY, Justin, Edwards, IL 61528 (US); KOCH, Dale, Tremont, IL 61568 (US); SWANSON, Todd, Morton, IL 61550 (US); SCHLIPF, Ben, Tremont, IL 61568 (US)
(74) Representative: AGCO Intellectual Property Department
(86) International application number: PCT/US2016/068392
(87) International publication number: WO 2017/112892

(56) References cited:
- DE-A1- 4 440 666
- US-A- 1 856 379
- US-A- 4 116 138
- US-A- 4 205 615
- US-A1- 2004 231 575
- US-A1- 2004 255 832
- US-A1- 2014 048 002
- US-A1- 2014 216 311
- US-A1- 2015 306 608
- US-B2- 8 677 914
- US-B2- 8 677 914

## Description

### BACKGROUND

In recent years, the availability of advanced location-specific agricultural application and measurement systems (used in so-called "precision farming" practices) has increased grower interest in determining spatial variations in soil properties and in varying input application variables in light of such variations. However, the available mechanisms for achieving optimal or desired placement of secondary inputs such as liquid fertilizer are lacking, leaving growers to choose between sub-optimal placement and/or amounts of such inputs. Thus, there is a need in the art for improved systems, methods and apparatus for agricultural input placement. US-8,677,914 discloses a planter that detects the position of deposited seed and places a compound intermittently in a position relative to the seed, according to the preamble of claim 1.

The invention is defined by the features of independent claims 1 and 6.

### BRIEF DESCRIPTION OF THE DRAWINGS

FIG. 1 is a top view of an embodiment of an agricultural planter.
FIG. 2 is a partial-cutaway side elevation view of an embodiment of a planter row unit.
FIG. 3 schematically illustrates an embodiment of a crop input application system.
FIG. 4 illustrates a method of controlling crop input placement.
FIG 5 is a schematic top view illustration of a liquid control system.
FIG. 6A is a side elevation view of an example of a position control actuator in a first configuration.
FIG. 6B is a side elevation view of the position control actuator of FIG. 6A in a second configuration.
FIG. 7A is a rear elevation view of an embodiment of the invention with a position control actuator in a first configuration.
FIG. 7B is a rear elevation view of the position control actuator of FIG. 7A in a second configuration.
FIG. 8A is a rear elevation view of still another embodiment of a position control actuator in a first configuration.
FIG. 8B is a rear elevation view of the position control actuator of FIG. 8A in a second configuration.
FIG. 9A is a side elevation view of an embodiment of a position control actuator in a first configuration.
FIG. 9B is a side elevation view of the position control actuator of FIG. 9A in a second configuration.

### DESCRIPTION

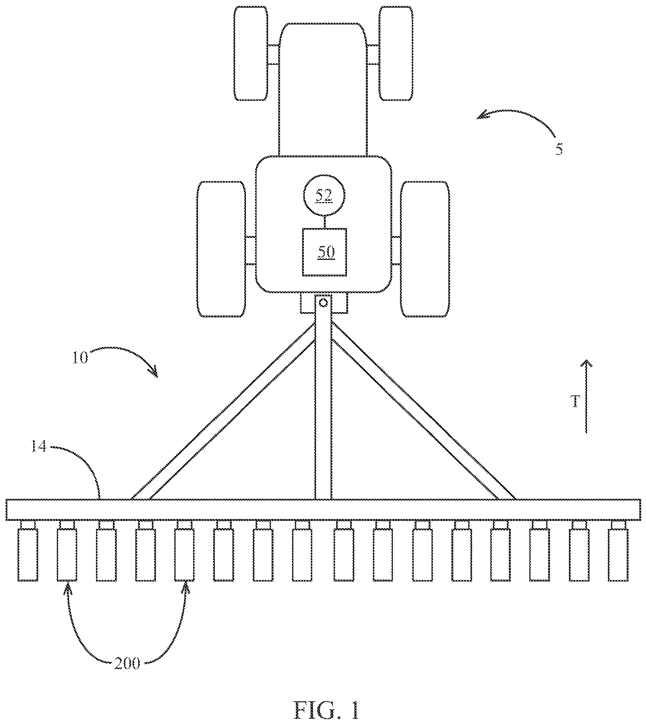

Referring now to the drawings, wherein like reference numerals designate identical or corresponding parts throughout the several views, FIG. 1 illustrates a tractor 5 traveling along a direction of travel T and drawing an agricultural implement 10, e.g., a planter, comprising a toolbar 14 operatively supporting multiple row units 200. An implement monitor 50 preferably including a central processing unit ("CPU"), memory and graphical user interface ("GUI") (e.g., a touch-screen interface) is preferably located in the cab of the tractor 5. A global positioning system ("GPS") receiver 52 is preferably mounted to the tractor 5.

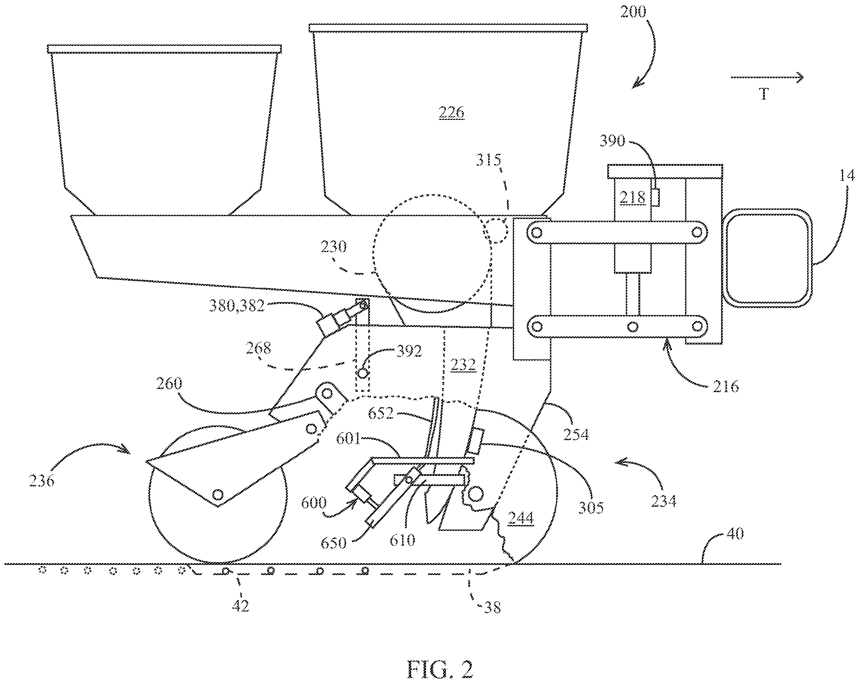

Turing to FIG. 2, an embodiment is illustrated in which the row unit 200 is a planter row unit. The row unit 200 is preferably pivotally connected to the toolbar 14 by a parallel linkage 216. An actuator 218 is preferably disposed to apply lift and/or downforce on the row unit 200. A solenoid valve 390 is preferably in fluid communication with the actuator 218 for modifying the lift and/or downforce applied by the actuator. An opening system 234 preferably includes two opening discs 244 rollingly mounted to a downwardly-extending shank 254 and disposed to open a v-shaped trench 38 in the soil 40. A pair of gauge wheels (not shown due to cutaway) is pivotally supported by a pair of corresponding gauge wheel arms 260; the height of the gauge wheels relative to the opening discs 244 sets the depth of the trench 38. A depth adjustment rocker 268 limits the upward travel of the gauge wheel arms 260 and thus the upward travel of the gauge wheels. A depth adjustment actuator 380 is preferably configured to modify a position of the depth adjustment rocker 268 and thus the height of the gauge wheels. The actuator 380 is preferably a linear actuator mounted to the row unit 200 and pivotally coupled to an upper end of the rocker 268. In some embodiments the depth adjustment actuator 380 comprises a device such as that disclosed in International Patent Application No. PCT/US2012/035585 ("the '585 application"). An encoder 382 is preferably configured to generate a signal related to the linear extension of the actuator 380; it should be appreciated that the linear extension of the actuator 380 is related to the depth of the trench 38 when the gauge wheel arms 260 are in contact with the rocker 268. A downforce sensor 392 is preferably configured to generate a signal related to the amount of force imposed by the gauge wheels on the soil 40; in some embodiments the downforce sensor 392 comprises an instrumented pin about which the rocker 268 is pivotally coupled to the row unit 200, such as those instrumented pins disclosed in Applicant's U.S. Patent Application No. 12/522,253 (Pub. No. US 2010/0180695).

Continuing to refer to FIG. 2, a seed meter 230 such as that disclosed in Applicant's International Patent Application No. PCT/US2012/030192, is preferably disposed to deposit seeds 42 from a hopper 226 into the trench 38, e.g., through a seed tube 232 disposed to guide the seeds toward the trench. In some embodiments, the meter is powered by an electric drive 315 configured to drive a seed disc within the seed meter. In other embodiments, the drive 315 may comprise a hydraulic drive configured to drive the seed disc. A seed sensor 305 (e.g., an optical or electromagnetic seed sensor configured to generate a signal indicating passage of a seed) is preferably mounted to the seed tube 232 and disposed to send light or electromagnetic waves across the path of seeds 42. A closing system 236 including one or more closing wheels is pivotally coupled to the row unit 200 and configured to close the trench 38.

Continuing to refer to FIG. 2, a liquid outlet 650 is preferably disposed above the trench 38 for deposition of liquid (e.g., fertilizer) into the trench (i.e., planting furrow). Liquid is communicated to the liquid outlet 650 via a tube or conduit 652 from a liquid source (not shown). The liquid outlet 650 may be pivotally mounted, e.g. to a bracket 610 mounted to the shank 254. A positioning control actuator 600 preferably moves (e.g., reorient, positionally adjust, pivot, translate, rotate, redirect, reshape) the liquid outlet 650 and/or a liquid (e.g., stream, droplet, spray) deposited by the implement 10 (e.g., through the liquid outlet 650). The positioning control actuator preferably modifies the position (e.g., relative to the row unit 200) at which crop input (e.g., liquid, fertilizer) is deposited on the soil. It should be appreciated that the positioning control actuator 600 is mounted to the row unit 200 by an appropriate connection (e.g., using a mounting bracket) so as to be able to change the position/direction of the liquid outlet 650. The mounting position is not important and can be installed at any available position on row unit 200. In one embodiment, positioning control actuator 600 is mounted to a row unit 200 via mounting bracket 601.

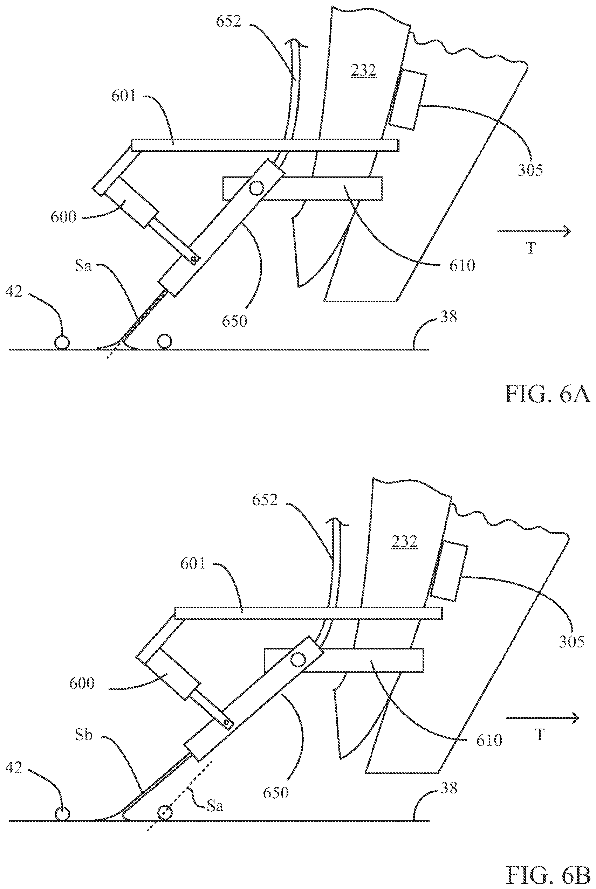

The positioning control actuator 600 of FIG. 2 is illustrated in a first configuration in FIG. 6A and in a second configuration in FIG. 6B. It should also be appreciated that in FIG. 6B the row unit 200 is shown advanced along the direction of travel T relative to the position of FIG. 6B while the trench 38 and seeds 42 are shown in the same position in both drawing figures.

In the first configuration shown in FIG. 6A, the positioning control actuator 600 (e.g., a linear actuator) is extended to a first extent such that the liquid outlet 650 is at a first orientation. In the first configuration shown in FIG. 6A, a direction of liquid travel (e.g., orientation of a stream or droplet movement) is generally along an axis Sa.

In the second configuration shown in FIG. 6B, the positioning control actuator 600 is extended to a second extent (e.g., a lesser extent such that the positioning control actuator is shortened) such that the liquid outlet 650 is at a second orientation (e.g., raised relative to the first orientation). In the second configuration shown in 6B, a direction of liquid travel is generally along an axis Sb (e.g., raised relative to the axis Sa).

Comparing FIG. 6A and FIG. 6B, it should be appreciated that the positioning control actuator 600 may be used according to some implementations to control the positioning of a crop input (e.g., liquid, fertilizer) relative to seed deposited by the row unit 200 in the trench 38. For example, as shown in FIG. 6B, reconfiguring the positioning control actuator 600 (and thus reorienting the liquid outlet 650) when the row unit 200 is in the position of FIG. 6B preferably causes the liquid stream to avoid the seed which would have otherwise intersected the axis Sa. Thus in some implementations the positioning control actuator 600 may be used to direct liquid away from a seed (e.g., to avoid depositing liquid directly to a seed). In other implementations, the positioning control actuator 600 may be used to direct liquid toward a seed. It should be appreciated that the illustrated reorientation is a longitudinal reorientation, e.g., reorientation in a plane longitudinal to the direction of travel.

It should be appreciated that the positioning control actuator 600 may be any device suited to adjust the position of liquid deposition as desired, e.g., a servo motor, stepper motor. In some examples, the positioning control actuator may be a motor having an output shaft mounted to a cam which contacts (e.g., slides against or rotates) the liquid outlet 650 to move the liquid outlet between a first and second position.

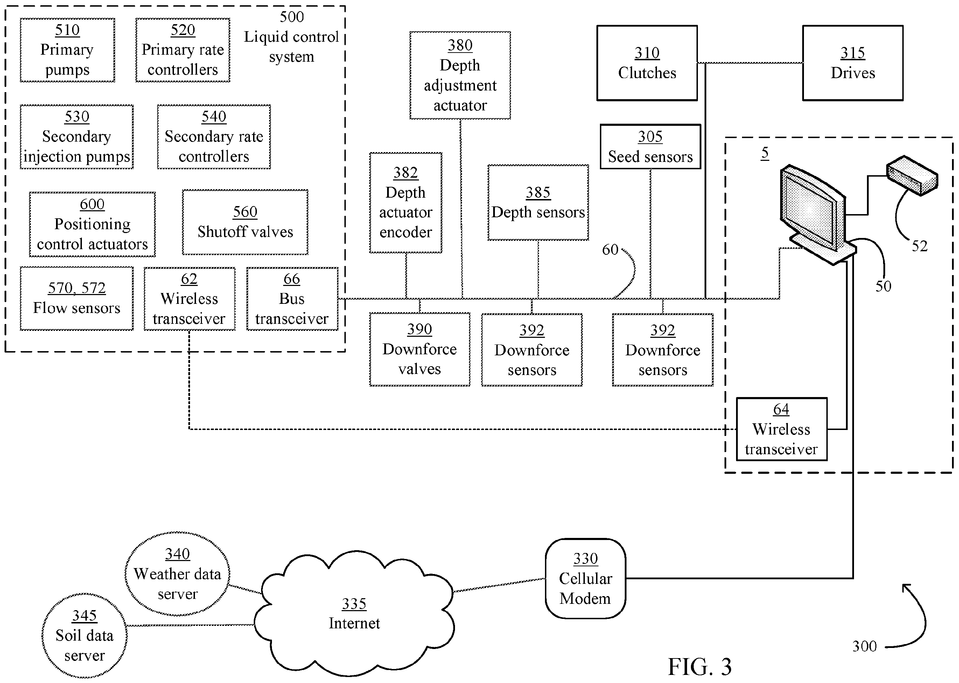

Turning to FIG. 3, a depth control and soil monitoring system 300 is schematically illustrated. The monitor 50 is preferably in data communication with components associated with each row unit 200 including the drives 315, the seed sensors 305, the GPS receiver 52, the downforce sensors 392, the valves 390, the depth adjustment actuator 380, and the depth actuator encoders 382. In some embodiments, particularly those in which each seed meter 230 is not driven by an individual drive 315, the monitor 50 is also preferably in data communication with clutches 310 configured to selectively operably couple the seed meter 230 to the drive 315.

Continuing to refer to FIG. 3, the monitor 50 is preferably in data communication with a cellular modem 330 or other component configured to place the monitor 50 in data communication with the Internet, indicated by reference numeral 335. Via the Internet connection, the monitor 50 preferably receives data from a weather data server 340 and a soil data server 345.

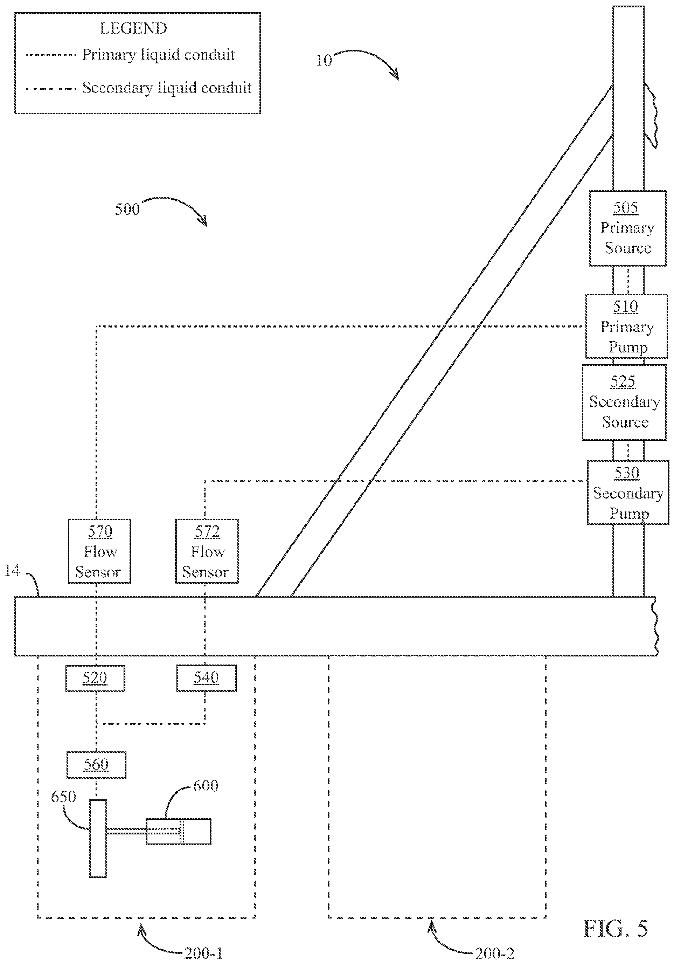

FIGs. 3 and 5 also schematically illustrate a liquid control system 500. Referring to FIG. 5, a primary source 505 (e.g., liquid tank) is preferably mounted to the implement frame and preferably contains a primary crop input (e.g., fertilizer). A primary pump 510 (e.g., liquid pump) preferably propels liquid from the primary source 505 to a plurality of row units 200 mounted to the implement frame via a primary liquid conduit such as a flexible hose. The primary pump may be configured to selectively impose an adjustable commanded flow rate or pressure in the liquid conduit. A flow sensor 570-1 is preferably in fluid communication (e.g., in series or in parallel) with the primary liquid conduit and preferably generates a signal related to the flow rate of fluid in the primary liquid conduit. A primary rate controller 520 (e.g., flow control valve, rate control valve, fluid injector) preferably receives fluid from the primary source 505 and preferably modifies a flow rate in the primary liquid conduit in response to a command signal.

In some embodiments, a secondary source 525 (e.g., liquid tank, granular tank) may be mounted to the implement frame and preferably contains a secondary crop input (e.g., fertilizer). In some such embodiments, the secondary source contains fertilizer in a greater concentration than the primary source; in other embodiments, the primary source contains a carrier liquid such as water and the secondary source contains a fertilizer (e.g., liquid fertilizer and/or dry fertilizer) for injection into the carrier liquid. A secondary pump 530 (e.g., liquid pump) preferably propels liquid from the secondary source 525 to the plurality of row units 200 mounted to the implement frame via a secondary liquid conduit such as a flexible hose. The secondary pump may be configured to selectively impose an adjustable commanded flow rate or pressure in the liquid conduit. A flow sensor 572 is preferably in fluid communication (e.g., in series or in parallel) with the secondary liquid conduit and preferably generates a signal related to the flow rate of fluid in the secondary liquid conduit. A secondary rate controller 540 (e.g., flow control valve, rate control valve, fluid injector) preferably receives fluid from the primary source 525 and preferably modifies a flow rate in the secondary liquid conduit in response to a command signal.

The primary and secondary liquid conduits preferably combine into a single flow stream which is preferably deposited from the liquid outlet 650. A shut-off valve 560 preferably selectively prevents or allows flow from the liquid outlet 650. As described herein, the positioning actuator preferably selectively modifies a position and/or orientation of the liquid outlet 650 and/or selectively modifies a direction or pattern of flow from the liquid outlet in response to a command signal.

As illustrated in FIG. 3, the components of the liquid control system 500 are preferably in data communication with the monitor 50 for transfer of data (e.g., data signals corresponding to flow rates, pressures, valve positions, actuator positions) to the monitor 50 and receipt of commands (e.g., command signals corresponding to flow rates, pressures, valve states, actuator positions) from the monitor 50. In some embodiments, some or all of the components of the liquid control system 500 are in data communication with the monitor 50 via a data bus 60 (e.g., a CAN bus), preferably by the use of a bus transceiver 66 (e.g., a CAN transceiver). Alternatively or additionally, in the embodiment illustrated in FIG. 3, some or all of the components of the liquid control system 500 are in data communication with the monitor 50 via a first wireless transceiver 62 (e.g., mounted to the row unit 200) and a second wireless transceiver 64 (e.g., in the tractor 5 or on the implement toolbar). The wireless transceivers 62 at each row unit are preferably in data communication with a single wireless transceiver 64 which is in turn in data communication with the monitor 50. The wireless transceiver may be mounted to the toolbar 14 or in the cab of the tractor 5. In some embodiments, the wireless transceiver 62 and/or the wireless transceiver 64 may be replaced or supplemented with a wireless transmitter and/or a wireless transmitter.

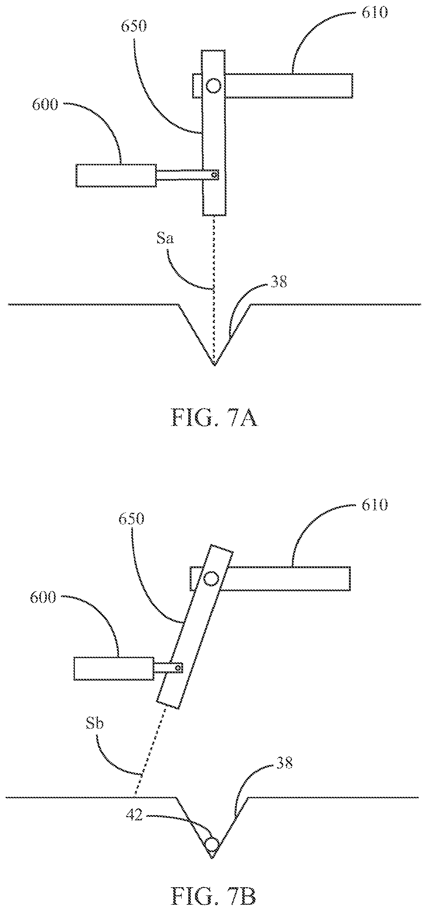

Referring to FIGs. 7A and 7B, an embodiment of the invention is illustrated in a first and second configuration, respectively, from a rear elevation view such that the direction of travel is into the page in both drawing figures. In the first configuration, positioning control actuator 600 is extended such that the liquid outlet 650 is in a first orientation in which liquid is deposited along an axis Sa which may intersect the trench 38 (e.g., the bottom of the trench). In the second configuration, the positioning control actuator 600 is shortened such that the liquid outlet 650 is reoriented to a second orientation in which liquid is deposited along an axis Sb which does not intersect the trench 38 (or in some embodiments, intersects a vertically higher portion of a sidewall of the trench rather than the bottom of the trench). It should be appreciated that the illustrated reorientation is a transverse reorientation, e.g., reorientation in a plane transverse to the direction of travel. It should be appreciated that the embodiment of FIGs. 7A, 7B may be used to modify the position of liquid deposition relative to a seed. For example, in FIG. 7A the liquid outlet 650 is not disposed above a seed 42, whereas in FIG. 7B the implement has moved forward slightly such that the liquid outlet 650 is disposed above a seed 42; reorientation of the liquid outlet 650 thus avoids deposition of liquid directly to seed 42. It should be appreciated that in embodiments similar to that shown in FIGs. 7A and 7B, a rotational actuator (e.g., electric motor) may be used rather than a linear actuator to reorient the liquid outlet 650.

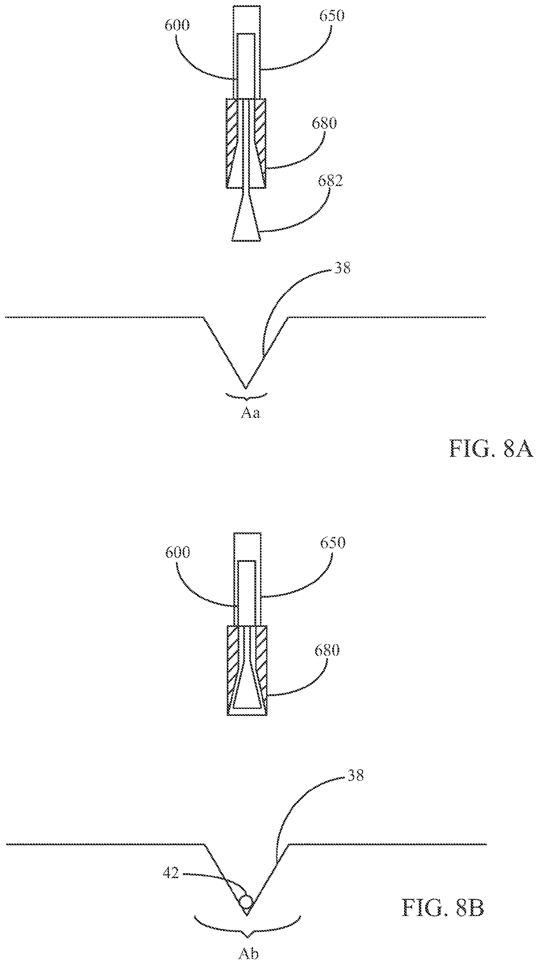

Turning to FIGs. 8A and 8B, another embodiment is illustrated in which the positioning control actuator 600 comprises a nozzle configured to selectively change a pattern and/or area of liquid deposition (e.g., relative to a seed trench or seed). In the first configuration shown in FIG. 8A, the actuator 600 extends a tip 682 partially outside of a nozzle body 680 (shown in partial cross-section) such that liquid released from the liquid outlet 650 is deposited over a relatively narrow area Aa (e.g., an area entirely within the trench 38). In the second configuration shown in FIG. 8B, the actuator 600 retracts the tip 682 toward (e.g., fully within) the nozzle body 680 such that liquid released from the liquid outlet 650 is deposited in a wider (e.g., hollow circular) pattern which preferably extends over a wider area Ab than the area Aa. The area Ab may extend beyond the trench 38. It should be appreciated that the embodiment of FIGs. 8A, 8B may be used to modify the position and/or area of liquid deposition relative to a seed. For example, in FIG. 8A the liquid outlet 650 is not disposed above a seed 42, whereas in FIG. 8B the implement has moved forward slightly such that the liquid outlet 650 is disposed above a seed 42; adjustment of the nozzle tip 682 thus spreads the area of liquid application applied adjacent to seed 42, and in some embodiments may avoid liquid application on the seed 42 (e.g., by creating a hollow circular spray pattern around the seed 42 when viewed from above). This embodiment can be combined with any other embodiment described herein, such as the ones in FIGs. 6A, 6B, 7A, 7B, 9A, and 9B.

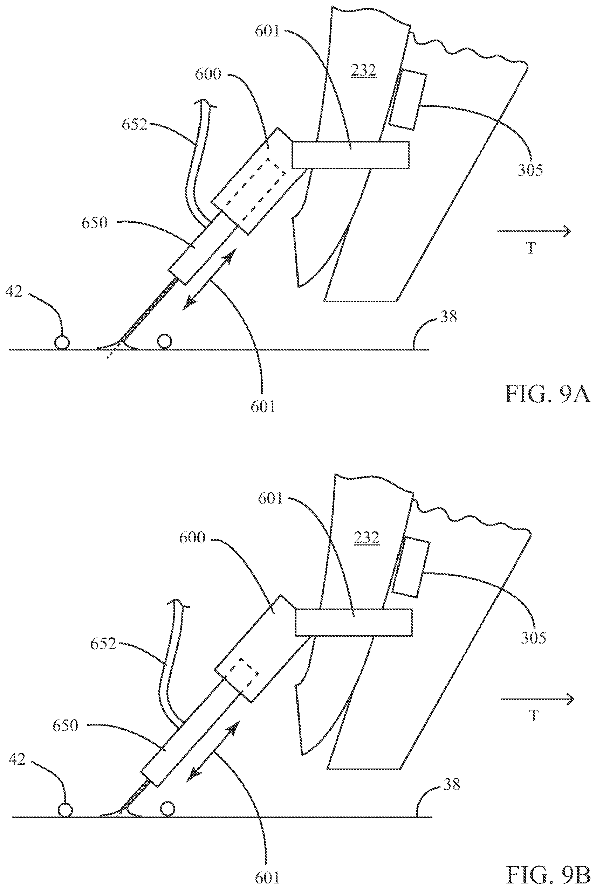

Turning to FIGs. 9A and 9B, another embodiment is illustrated in which the positioning control actuator 600 modifies an axial position of the liquid outlet 650 in a direction of liquid flow. In this embodiment, the liquid outlet 650 is connected to positioning control actuator 600 which can oscillate the liquid outlet 650 as indicated by arrow 601 between a retracted position (FIG. 9A) and an extended position (FIG. 9B). This embodiment may be combined with any other embodiments described herein, such as those illustrated and described in FIGs. 6A, 6B, 7A, 7B, 8A and 8B.

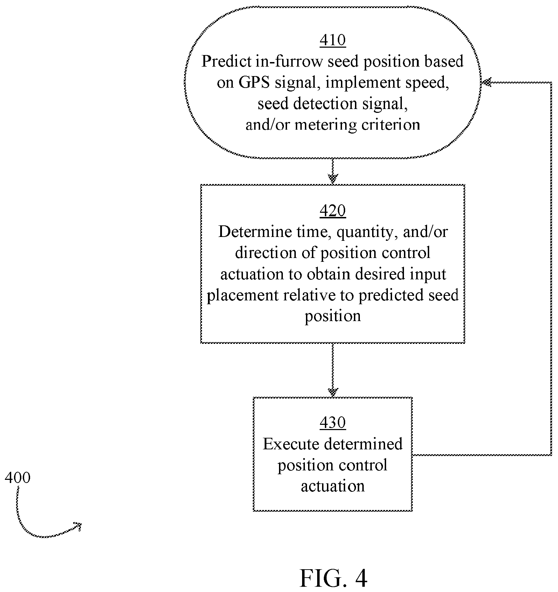

FIG. 4 illustrates a method of using any of the embodiments described herein to modify the position and/or area of liquid deposition relative to a seed. At step 410, the monitor 50 preferably predicts an in-furrow seed position. For example, the monitor 50 may predict the in-furrow seed position by (1) determining a position of the implement based on a GPS signal from the GPS receiver 52, (2) determining a seed deposition location by applying in-memory offsets to the implement position, (3) determining a time of seed deposition based on a seed detection signal (e.g., from an optical or other electromagnetic seed sensor mounted to a seed tube or seed-to-ground delivery apparatus, or from an optical or other seed sensor disposed on a seed firmer) and/or a metering criterion such as a meter speed or position. At step 420, the monitor 50 preferably determines a time, quantity, and/or direction of position control actuation to obtain a desired input placement relative to the predicted seed position. For example, in cases where it is desired to reduce the amount of fluid directly deposited the monitor 50 may determine that the position actuator should modify its configuration (e.g., to one of the second configurations shown in FIGs. 6B, 7B, or 8B) when the liquid outlet 650 is above a seed. At step 430, the monitor 430 preferably executes the position control actuation at the time determined at step 420. The process 400 is preferably repeated as the implement moves through the field such that the desired placement relative to each seed is obtained.

In some embodiments, the process 400 additionally include a step of determining whether a predictability of seed location is above a sufficient threshold to carry out the process 400. The predictability of seed location may correspond to a seed singulation or seed spacing metric determined by the monitor 50. If the predictability of seed location is below the threshold, the monitor 50 may command the actuator 600 to remain in one of the first configurations of FIGs. 6A, 7A, 7B and optionally reduce the rate of liquid fertilizer application to a level determined to be safe for direct application to the seeds, or in some cases the rate of liquid fertilizer application may be set to zero using one or more components of the liquid control system 500.

In some embodiments, the liquid outlet 650 and the positioning actuator 600 may be disposed longitudinally forward of (i.e., along the travel direction T) the seed tube. In implementing such embodiments to modify the positioning of a crop input relative to the seeds, the process 400 is preferably modified to predict the position of seeds to be deposited in the trench 38 and adjust the positioning actuator 600 to modify the position of crop input positioning relative to locations at which a seed is predicted to be planted. In some examples, the positioning actuator 600 is actuated to create areas of the trench having no or reduced liquid application, which areas may correspond to areas of predicted seed locations.

The foregoing description is presented to enable one of ordinary skill in the art to make and use the invention and is provided in the context of a patent application and its requirements. Various modifications to the preferred embodiment of the apparatus, and the general principles and features of the system and methods described herein will be readily apparent to those of skill in the art. Thus, the present invention is not to be limited to the embodiments of the apparatus, system and methods described above and illustrated in the drawing figures, but is to be accorded the widest scope consistent with the appended claims.

## Claims

1. A crop input control system for an agricultural implement (10) having a plurality of row units, comprising:
a planter row unit (200) configured to open a planting trench (38) and deposit a seed (42) in said planting trench (38);
a liquid control system (500) configured to deposit liquid in said planting trench (38), comprising:
a positioning control actuator (600) disposed to modify a position of a liquid outlet (650) to change liquid deposition relative to said seed (42), **characterised in that** said position of liquid deposition is changed transverse to a direction of travel of said planter row unit (200).

2. The crop input control system of claim 1, wherein said positioning control actuator (600) is configured to modify a pattern of liquid discharge.

3. The crop input control system of claim 2, wherein said positioning control actuator (600) is configured to modify a position of a tip (682) disposed in a nozzle (680) that is disposed at said liquid outlet (650).

4. The crop input control system of claim 1, wherein a nozzle (680) is disposed at said liquid outlet (650), and said positioning control actuator (600) is configured to modify an axial position of said nozzle (680) along a direction of flow of said liquid, and optionally oscillate said nozzle (680).

5. The crop input control system of claim 1, wherein said positioning control actuator (600) is disposed to modify a position of liquid deposition and a pattern of liquid discharge.

6. A method of modifying liquid deposition relative to a seed (42) during planting comprising:
opening a planting trench (38) and depositing seed (42) in said trench (38);
depositing liquid to said planting trench (38) through a liquid outlet (650); and
actuating a positioning control actuator (600) to modify a position of said liquid outlet (650) to change liquid deposition relative to said seed (42), **characterised in that** said position of liquid deposition is changed transverse to a direction of said trench (38).

7. The method of claim 6, wherein said positioning control actuator (600) further modifies a pattern of liquid discharge.

8. The method of claim 7, wherein said positioning control actuator (600) further modifies a position of a tip (682) disposed in a nozzle (680) that is disposed at said liquid outlet (650).

9. The method of claim 6, wherein a nozzle (680) is disposed at said liquid outlet, and said positioning control actuator (600) further modifies an axial position of said nozzle along a direction of flow of said liquid.

10. The method of claim 9, wherein said position control actuator (600) oscillates said nozzle (680).

11. The method of claim 6, wherein said positioning control actuator (600) modifies a position of liquid deposition and modifies said pattern of liquid discharge.

## Patentansprüche

1. Erntegut-Eingangsregelsystem für ein landwirtschaftliches Anbaugerät (10) mit einer Mehrzahl von Reiheneinheiten, mit:
einer Pflanzer-Reiheneinheit (200), die konfiguriert ist, um einen Pflanzgraben (38) zu öffnen und eine Saat (42) in den Pflanzgraben (38) abzugeben;
einem Flüssigkeitsregelsystem (500), das konfiguriert ist, um Flüssigkeit in den Pflanzgraben (38) abzugeben, mit:
einem Positionierungsregelaktuator (600), der angeordnet ist, um eine Position eines Flüssigkeitsauslasses (650) zu modifizieren, um eine Flüssigkeitsabgabe relativ zu der Saat (42) zu verändern, **dadurch gekennzeichnet, dass** die Position der Flüssigkeitsabgabe quer zu einer Arbeitsrichtung der Pflanzer-Reiheneinheit (200) verändert wird.

2. Erntegut-Eingangsregelsystem nach Anspruch 1, wobei der Positionierungsregelaktuator (600) konfiguriert ist, um ein Muster der Flüssigkeitsabsonderung zu modifizieren.

3. Erntegut-Eingangsregelsystem nach Anspruch 2, wobei der Positionierungsregelaktuator (600) konfiguriert ist, um eine Position einer in einer Düse (680) angeordneten Spitze (682) zu verändern, die an dem Flüssigkeitsauslass (650) angeordnet ist.

4. Erntegut-Eingangsregelsystem nach Anspruch 1, wobei eine Düse (680) an dem Flüssigkeitsauslass (650) angeordnet ist und der Positionierungsregelaktuator (600) konfiguriert ist, um eine axiale Position der Düse (680) entlang einer Fließrichtung der Flüssigkeit zu modifizieren und optional die Düse (680) zu oszillieren.

5. Erntegut-Eingangsregelsystem nach Anspruch 1, wobei der Positionierungsregelaktuator (600) abgeordnet ist, um eine Position der Flüssigkeitsabgabe und ein Muster der Flüssigkeitsabsonderung zu modifizieren.

6. Verfahren zum Modifizieren einer Flüssigkeitsabgabe relativ zu einer Saat (42) während des Pflanzens, mit:
Öffnen eines Pflanzgrabens (38) und Abgeben der Saat (42) in den Graben (38);
Abgeben von Flüssigkeit in den Pflanzgraben (38) durch einen Flüssigkeitsauslass (650); und
Betätigen eines Positionierungsregelaktuators (600), um eine Position des Flüssigkeitsauslasses (650) zu modifizieren, um eine Flüssigkeitsabgabe relativ zu der Saat (42) zu verändern, **dadurch gekennzeichnet, dass** die Position der Flüssigkeitsabgabe quer zu einer Richtung des Grabens (38) verändert wird.

7. Verfahren nach Anspruch 6, wobei der Positionierungsregelaktuator (600) weiterhin ein Muster der Flüssigkeitsabsonderung modifiziert.

8. Verfahren nach Anspruch 7, wobei der Positionierungsregelaktuator (600) weiterhin eine Position einer in einer Düse (680) angeordneten Spitze (682) verändert, die an dem Flüssigkeitsauslass (650) angeordnet ist.

9. Verfahren nach Anspruch 6, wobei eine Düse (680) an dem Flüssigkeitsauslass angeordnet ist und der Positionierungsregelaktuator (600) weiterhin eine axiale Position der Düse entlang einer Fließrichtung der Flüssigkeit modifiziert.

10. Verfahren nach Anspruch 9, wobei der Positionierungsregelaktuator (600) die Düse (680) oszilliert.

11. Verfahren nach Anspruch 6, wobei der Positionierungsregelaktuator (600) eine Position der Flüssigkeitsabgabe und ein Muster der Flüssigkeitsabsonderung modifiziert.

## Revendications

1. Dispositif de commande d'entrée de récolte pour un outillage agricole (10) comportant une pluralité d'unités de formation de rangée, comprenant ;
une unité de formation de rangée de plantation (200) configurée de manière à ouvrir une tranchée de plantation (38) et à déposer une graine (42) dans ladite tranchée de plantation (38) ;
un dispositif de commande de liquide (500) configuré de manière à déposer du liquide dans ladite tranchée de plantation (38), comprenant ;
un actionneur de commande de positionnement (600) disposé de manière à modifier une position d'une sortie de liquide (650) afin de modifier un dépôt de liquide par rapport à ladite graine (42), **caractérisé en ce que** ladite position de dépôt liquide est modifiée transversalement à une direction de déplacement de ladite unité de formation de rangée de plantation (200).

2. Dispositif de commande d'entrée de récolte selon la revendication 1, dans lequel ledit actionneur de commande de positionnement (600) est configuré de manière à modifier un profil de déchargement de liquide.

3. Dispositif de commande d'entrée de récolte selon la revendication 2, dans lequel ledit actionneur de commande de positionnement (600) est configuré de manière à modifier une position d'un embout (682) disposé dans un orifice (680) qui est disposé au niveau de ladite sortie de liquide (650).

4. Dispositif de commande d'entrée de récolte selon la revendication 1, dans lequel un orifice (680) est disposé au niveau de ladite sortie de liquide (650) et ledit actionneur de commande de positionnement (600) est configuré de manière à modifier une position axiale dudit orifice (680) suivant une direction d'écoulement dudit liquide et, en variante, à faire osciller ledit orifice (680).

5. Dispositif de commande d'entrée de récolte selon la revendication 1, dans lequel ledit actionneur de commande de positionnement (600) est disposé de manière à modifier une position de dépôt de liquide et un profil de déchargement de liquide.

6. Procédé de modification d'un dépôt de liquide par rapport à une graine (42) au cours de la plantation comprenant ;
l'ouverture d'une tranchée de plantation (38) et le dépôt d'une graine (42) dans ladite tranchée (38) ;
le dépôt de liquide dans ladite tranchée de plantation (38) à travers une sortie de liquide (650) ; et
l'activation d'un actionneur de commande de positionnement (600) de manière à modifier une position de ladite sortie de liquide (650) afin de modifier le dépôt de liquide par rapport à ladite graine (42), **caractérisé en ce que** ladite position de dépôt de liquide est modifiée transversalement à une direction de ladite tranchée (38).

7. Procédé selon la revendication 6, dans lequel ledit actionneur de commande de positionnement (600) modifie, en outre, un profil de déchargement de liquide.

8. Procédé selon la revendication 7, dans lequel ledit actionneur de commande de positionnement (600) modifie, en outre, une position d'un embout (682) disposé dans un orifice (630) qui est disposé au niveau de ladite sortie de liquide (650).

9. Procédé selon la revendication 6, dans lequel un orifice (680) est disposé au niveau de ladite sortie de liquide et ledit actionneur de commande de positionnement (600) modifie, en outre, une position axiale dudit orifice suivant une direction d'écoulement dudit liquide.

10. Procédé selon la revendication 9, dans lequel ledit actionneur de commande de position (600) fait osciller ledit orifice (680).

11. Procédé selon la revendication 6, dans lequel ledit actionneur de commande de positionnement (600) modifie une position de dépôt de liquide et modifie ledit profil de déchargement de liquide.
